(19) Europäisches Patentamt / European Patent Office / Office européen des brevets

(11) **EP 4 682 622 A1**

(12) **EUROPEAN PATENT APPLICATION**
published in accordance with Art. 153(4) EPC

(43) Date of publication:
**21.01.2026 Bulletin 2026/04**

(21) Application number: **23927589.4**

(22) Date of filing: **16.11.2023**

(51) International Patent Classification (IPC):
***G02C 7/06*** (2006.01)

(52) Cooperative Patent Classification (CPC):
**G02C 7/06**

(86) International application number:
**PCT/JP2023/041188**

(87) International publication number:
**WO 2024/189980 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.03.2023 JP 2023038235**

(71) Applicant: **Hoya Lens Thailand Ltd.**
**Pathumthani 12130 (TH)**

(72) Inventor: **KAGA, Tadashi**
**Tokyo 160-8347 (JP)**

(74) Representative: **Betten & Resch**
**Patent- und Rechtsanwälte PartGmbB**
**Maximiliansplatz 14**
**80333 München (DE)**

(54) **PROGRESSIVE MODE CHANGING METHOD FOR PROGRESSIVE POWER LENS, PROGRESSIVE MODE CHANGING SYSTEM FOR PROGRESSIVE POWER LENS, AND PROGRAM FOR PROGRESSIVE MODE CHANGING SYSTEM FOR PROGRESSIVE POWER LENS**

(57) There is provided a method for changing a progressive mode of a progressive power lens and related techniques thereof, the method including: obtaining a weight map on an xy plane coordinate system for changing from progressive mode 1 to progressive mode 2, the weight map having continuity in all directions on the xy plane coordinate system; obtaining a z-coordinate value $z_{add}$ by multiplying an approximate curvature $C_p$ on the xy plane coordinate system at each point on a surface $\alpha$, which is a design surface by weights $w_p$ corresponding to each point on the weight map; and designing a new surface $\alpha'$ based on the z-coordinate value $z_{addp}$ obtained in the obtaining the z-coordinate value.

**FIG. 1**

**Description**

Technical Field

The present invention relates to a method for changing a progressive mode of a progressive power lens, a system for changing the progressive mode of the progressive power lens, and a program for the system for changing the progressive mode of the progressive power lens.

Description of related art

Claim 1 of Patent document 1 describes a progressive power lens with a power greater than zero added to a prescription power in a specific region, so that a predetermined portion of an intermediate region has a power corresponding to a target distance, which is a preset distance between a near distance and a far distance. As described in Patent document 1, a technique of adjusting a relationship between a distance on a main line of sight and an addition power is conventionally known.

Prior art document

Patent document

[Patent Document 1] WO2016/047712 Pamphlet

Summary of the Invention

Problem to be solved by the Invention

In this specification, this relationship is also called an "addition profile." The shape of this addition profile is not easily changed. It is a matter of course that the change of the shape of the addition profile causes the change of the portions other than the main line of sight. As a result, using an astigmatism distribution map and a power distribution map, it is required to check whether no failure occurs in the astigmatism distribution and power distribution (that is, whether no design failure occurs in the progressive power lens) over an entire spectacle lens due to the change of the shape of the addition profile. In addition, this check must be performed every time the shape of the addition profile is changed.
For some progressive power lens wearers, it may be better to make the change of power more gradual in the vicinity of the near portion in the intermediate portion, and conversely, for the other progressive power lens wearers, it may be better to make the change of power more gradual in the vicinity of the distance portion in the intermediate portion while making the change of power larger in the vicinity of the near portion in the intermediate portion. That is, the present inventors have found that it is desirable to change the addition profile more easily depending on a wearer than in the situation described in the above paragraph.
An object of the present invention according to one example is to easily change the shape of the addition profile without causing a design failure.

Means for solving the problem

In order to solve the above problem, as shown in an example of the present invention, the present inventors found to multiply an approximate curvature or a z coordinate value at each point, that will be described in detail later, by weight, which is a value at each point of a weight map on a xy plane coordinate system, that is a weight map having continuity in all directions on the xy plane coordinate system for changing progressive mode 1 to progressive mode 2. Based on this finding, the present invention has the following aspects.
A first aspect of the present invention is a method for changing a progressive mode of a progressive power lens having an object side surface and an eyeball side surface, a near portion for visually recognizing an object at a near distance, a distance portion for visually recognizing an object farther than the near distance, and an intermediate portion for progressively increasing a refractive power between the near portion and the distance portion,
the method including:

obtaining a weight map on an xy plane coordinate system for changing from progressive mode 1 to progressive mode 2, the weight map having continuity in all directions on the xy plane coordinate system;
obtaining a distribution map of an approximate curvature $C_p$ at each point on a surface $\alpha$, which is a design surface, on the xy plane coordinate system;

multiplying the approximate curvature C$_p$ at each point on the xy plane coordinate system of the distribution map by weight w$_p$ at each point on the weight map to obtain a z-coordinate value z$_{addp}$ using the following formula:

[Formula 1]

$$z_{addp}(x,y) = \frac{c_p(x,y) * w_p(x,y) * (x^2 + y^2)}{1 + \sqrt{1 - \left(c_p(x,y) * w_p(x,y)\right)^2 * (x^2 + y^2)}}$$

and

designing a new surface α' based on the z-coordinate value z$_{addp}$ obtained in the obtaining the z-coordinate value, wherein when wearing spectacles, an axis passing through a lens center from an object side toward an eyeball side is z-axis, an axis extending from bottom to top and perpendicular to the z-axis is y-axis, and an axis extending from left to right and perpendicular to the z-axis is x-axis, and
the approximate curvature C$_p$ is defined as follows:
the approximate curvature C$_p$ at an arbitrary point p(x, y, z) on the surface α is calculated by using a reciprocal of a radius of a circle that passes through three points p'(-x, -y, z) and (0, 0, 0) that are rotationally symmetric with respect to the point p in an xy plane perpendicular to the z axis, and when the point p is (0,0,0), an average of two principal curvatures at the point p on the surface α is used as the approximate curvature C$_p$.

A second aspect of the present invention is the method for changing a progressive mode of a progressive power lens according to the first aspect,
wherein the obtaining the weight map includes:

creating a linear weight map by obtaining a rate of change of an addition curve of the progressive mode 2 relative to an addition curve of the progressive mode 1 from a progression start point to a near vision power measurement reference point on the xy plane coordinate system, according to a distance from the progression start point to the near vision power measurement reference point on the xy plane coordinate system;
creating a planar weight map by expanding a relationship between the distance and the rate of change obtained in the creation of the linear weight map is expanded with the progression start point being rotationally symmetric on the xy plane coordinate system; and
adjusting the planar weigh map that maintains continuity by smoothing discontinuity of the planar weight map that occurs due to the change in the rate of change.

A third aspect of the present invention is the method for changing a progressive mode of a progressive power lens according to the second aspect,
wherein in the adjustment of the planar weight map, the continuity is maintained by smoothing the discontinuity of the planar weight map while converting the xy plane coordinate system in the planar weight map to a polar coordinate, and multiplying a term relating to the rate of change in a function constituting the planar weight map by 0 when the polar coordinate is $0 \le \theta < \pi$, and multiplying it by sin$^2 \theta$ when the polar coordinate is $\pi \le \theta < 2\pi$.
A fourth aspect of the present invention is the method for changing a progressive mode of a progressive power lens according to any one of the first to third aspects, wherein when changing from the progressive mode 1 to the progressive mode 2, the rate of change of an addition power after change to an addition power before change is less than 0.125.
A fifth aspect of the present invention is the method for changing a progressive mode of a progressive power lens according to any one of the first to fourth aspects,

wherein the near portion is a region having a refractive power of (spherical refractive power S + addition power ADD-0.12D) or more, and
the distance portion is a portion for visually recognizing an object farther than a near distance, and is a region having a refractive power within a range of (spherical refractive power S ± 0.12D).

A sixth aspect of the present invention is the method for changing a progressive mode of a progressive power lens according to the fifth aspect, the method including:

judging at least either one of whether or not a difference between an addition power on the surface $\alpha$' designed in the designing the new surface $\alpha$' and an addition power on the surface $\alpha$ before being multiplied by the weight $w_p$ exceeds a threshold value or whether or not a difference between a curvature of the distance portion in the surface $\alpha$' designed in the designing the new surface $\alpha$' and a curvature of the distance portion in the surface $\alpha$ before multiplication by the weight $w_p$ exceeds a threshold value,

wherein when it is judged in the judgment that the threshold value is exceeded, redesigning is performed to obtain a new z coordinate value $z_p$ (x, y) at each point using the following formula, to design a surface $\alpha$" having the z coordinate value $z_p$ at each point.

[Formula 2]

$$z_p(x, y) = \frac{\left( \frac{\left( c_p(x,y) - c_{fa} \right) * \left( c_{nb} - c_{fb} \right)}{c_{na} - c_{fa}} + c_{fb} \right) * (x^2 + y^2)}{1 + \sqrt{1 - \left( \frac{\left( c_p(x,y) - c_{fa} \right) * \left( c_{nb} - c_{fb} \right)}{c_{na} - c_{fa}} + c_{fb} \right)^2 * (x^2 + y^2)}}$$

wherein $C_{fb}$ is a curvature of the distance portion before multiplication by the weight $w_p$, and $C_{nb}$ is a curvature of the near portion before multiplication by the weight wp, $C_{fa}$ is a curvature of the distance portion after multiplication by the weight $w_p$, and $C_{na}$ is a curvature of the near portion after multiplication by the weight $w_p$.

A seventh aspect of the present invention is a method for changing a progressive mode of a progressive power lens having an object-side surface and an eyeball-side surface, a near portion for visually recognizing an object at a near distance, a distance portion for visually recognizing an object at a distance farther than the near distance, and an intermediate portion for progressively increasing a refractive power between the near portion and the distance portion, the method including:

obtaining a weight map on an xy plane coordinate system for changing from progressive mode 1 to progressive mode 2, the weight map having continuity in all directions on the xy plane coordinate system;
obtaining a distribution map of z-coordinate values on the xy plane coordinate system at each point on a surface $\alpha$ which is a design surface;
obtaining a z-coordinate value $z_{addp}$ by multiplying the z-coordinate value on the xy plane coordinate system of the distribution map by weight $w_p$ corresponding to each point on the weight map; and
designing a new surface $\alpha$' based on the z-coordinate value $z_{addp}$ obtained in the obtaining the z-coordinate value, wherein when wearing spectacles, an axis passing through a lens center from an object side toward an eyeball side is z-axis, an axis perpendicular to the z-axis from bottom to top is y-axis, and an axis perpendicular to the z-axis from left to right is x-axis.

An eighth aspect of the present invention is a system for changing a progressive mode of a progressive power lens having an object-side surface and an eyeball-side surface, a near portion for visually recognizing an object at a near distance, a distance portion for visually recognizing an object at a distance farther than the near distance, and an intermediate portion for progressively increasing a refractive power between the near portion and the distance portion, the system including:

a weight map acquisition unit that obtains a weight map on an xy plane coordinate system for changing from progressive mode 1 to progressive mode 2, the weight map having continuity in all directions on a xy plane coordinate system;
an approximate curvature map acquisition unit that obtains a distribution map of an approximate curvature $C_p$ on the xy plane coordinate system, at each point on the surface $\alpha$, which is a design surface; and
a z-coordinate value acquisition unit that multiplies the approximate curvature $C_p$ at each point on the xy plane coordinate system of the distribution map by weight $w_p$ corresponding to each point on the weight map, to obtain a z-coordinate value $z_{addp}$ using the following formula:

[Formula 3]

$$z_{addp}(x,y) = \frac{c_p(x,y) * w_p(x,y) * (x^2 + y^2)}{1 + \sqrt{1 - \left(c_p(x,y) * w_p(x,y)\right)^2 * (x^2 + y^2)}}$$

and

a design unit that designs a new surface α' based on the z-coordinate value $z_{addp}$ obtained by the z-coordinate value acquisition unit,

wherein when wearing spectacles, an axis passing through a lens center from an object side toward an eyeball side is z-axis, an axis perpendicular to the z-axis from bottom to top is y-axis, and an axis perpendicular to the z-axis from left to right is x-axis, and

the approximate curvature $C_p$ at an arbitrary point p(x, y, z) on the surface α is calculated by using a reciprocal of a radius of a circle that passes through three points p'(-x, -y, z) and (0, 0, 0) that are rotationally symmetric with respect to the point p in the xy plane perpendicular to the z axis, and when the point p is (0,0,0), an average of two principal curvatures at the point p on the surface α is used as the approximate curvature $C_p$.

A nineth aspect of the present invention is the system for changing a progressive mode of a progressive power lens according to the eighth aspect, wherein the weight map acquisition unit comprises:

a linear weight map creation unit that obtains a rate of change of an addition curve of progressive mode 2 relative to an addition curve of progressive mode 1 from a progression start point to a near vision power measurement reference point on an xy plane coordinate system, according to a distance from the progression start point to the near vision power measurement reference point on the xy plane coordinate system;

a planar weight map creation unit that develops a relationship between the distance and the rate of change obtained by the linear weight map creation unit, with the progression start point being rotationally symmetrical, on the xy plane coordinate system; and

a planar weight map adjustment unit that maintains continuity of the planar weight map by smoothing discontinuity of the planar weight map that occurs due to a change in the rate of change, while changing the rate of change to 1 in an upper side of the progression start point in the planar weight map obtained by the planar weight map creation unit.

A tenth aspect of the present invention is the system for changing a progressive mode of a progressive power lens according to the eighth or ninth aspect, the system including:

a judgment unit that judges at least either one of whether or not a difference between an addition power on the surface α' designed by the design unit and an addition power on the surface α before being multiplied by the weight $w_p$ exceeds a threshold value or whether or not a difference between a curvature of the distance portion in the surface α' designed by the design unit and a curvature of the distance portion in the surface α before multiplication by the weight $w_p$ exceeds a threshold value; and

a redesign unit that obtains, when it is judged by the judgment unit that the threshold value is exceeded, a new z coordinate values $z_p$ (x, y) at each point using the following formula, to design a surface α" having the z coordinate value $z_p$ at each point.

An eleventh aspect of the present invention is a program for a system for changing a progressive mode of a progressive power lens having an object-side surface and an eyeball-side surface, and having a near portion for visually recognizing an object at a near distance, a distance portion for visually recognizing an object at a distance farther than the near distance, and an intermediate portion for progressively increasing a refractive power between the near portion and the distance portion, the system causing a computer to function as:

a weight map acquisition unit that obtains a weight map on an xy plane coordinate system for changing from progressive mode 1 to progressive mode 2, the weight map having continuity in all directions on the xy plane coordinate system;

an approximate curvature map acquisition unit that obtains a distribution map of an approximate curvature $C_p$ on the xy plane coordinate system, at each point on the surface α, which is a design surface; and

a z-coordinate value acquisition unit that multiplies the approximate curvature $C_p$ at each point on the xy plane coordinate system of the distribution map by weight $w_p$ corresponding to each point on the weight map, to obtain a z-coordinate value $z_{addp}$ using the following formula:

[Formula 4]

$$z_{addp}(x, y) = \frac{c_p(x, y) * w_p(x, y) * (x^2 + y^2)}{1 + \sqrt{1 - \left(c_p(x, y) * w_p(x, y)\right)^2 * (x^2 + y^2)}}$$

and

a design unit that designs a new surface $\alpha'$ based on the z-coordinate value $z_{addp}$ obtained by the z-coordinate value acquisition unit,

wherein when wearing spectacles, an axis passing through a lens center from an object side toward an eyeball side is z-axis, an axis perpendicular to the z-axis from bottom to top is y-axis, and an axis perpendicular to the z-axis from left to right is x-axis, and

the approximate curvature $C_p$ is defined as follows:

the approximate curvature $C_p$ at an arbitrary point p(x, y, z) on the surface $\alpha$ is calculated by using a reciprocal of a radius of a circle that passes through three points p'(-x, -y, z) and (0, 0, 0) that are rotationally symmetric with respect to the point p in the xy plane perpendicular to the z axis, and when the point p is (0,0,0), an average of two principal curvatures at the point p on the surface $\alpha$ is used as the approximate curvature $C_p$.

A twelfth aspect of the present invention is the program for a system for changing a progressive mode of a progressive power lens according to the eleventh aspect,

wherein the weight map acquisition unit includes:

a linear weight map creation unit that obtains a rate of change of an addition curve of progressive mode 2 relative to an addition curve of progressive mode 1 from a progression start point to a near vision power measurement reference point on an xy plane coordinate system, according to a distance from the progression start point to the near vision power measurement reference point on the xy plane coordinate system;

a planar weight map creation unit that develops a relationship between the distance and the rate of change obtained by the linear weight map creation unit, with the progression start point being rotationally symmetrical, on the xy plane coordinate system; and

a planar weight map adjustment unit that maintains continuity of the planar weight map by smoothing discontinuity of the planar weight map that occurs due to a change in the rate of change, while changing the rate of change to 1 in an upper side of the progression start point in the planar weight map obtained by the planar weight map creation unit.

A thirteenth aspect of the present invention is a program for changing a system for changing a progressive mode of a progressive power lens according to the eleventh or twelfth aspect, the program causing a computer to function as:

a judgment unit that judges at least either one of whether or not a difference between an addition power on the surface $\alpha'$ designed by the design unit and an addition power on the surface $\alpha$ before being multiplied by the weight $w_p$ exceeds a threshold value or whether or not a difference between a curvature of the distance portion in the surface $\alpha'$ designed by the design unit and a curvature of the distance portion in the surface $\alpha$ before multiplication by the weight $w_p$ exceeds a threshold value; and

a redesign unit that obtains, when it is judged by the judgment unit that the threshold value is exceeded, a new z coordinate value $z_p(x, y)$ at each point using the following formula, to design a surface $\alpha''$ having the z coordinate value $z_p$ at each point.

Advantage of the invention

According to one example of the present invention, the shape of an addition profile can be easily changed without causing a design failure.

Brief description of the drawings

[FIG. 1] FIG. 1 is a schematic flow chart of a method for changing a progressive mode of a progressive power lens according to one aspect of the present invention.

[FIG. 2] FIG. 2 is a schematic block diagram of a system for changing the progressive mode of the progressive power lens according to one aspect of the present invention.

[FIG. 3] FIG. 3 is an addition profile according to Reference Example 1 (solid line), Example 1 (10% reduction in ADD) (dashed line), and Example 2 (10% increase in ADD) (dotted line).

[FIG. 4A] FIG. 4A is an average power distribution map on a progressive refractive surface according to Reference Example 1.

[FIG. 4B] FIG. 4B is an astigmatism distribution map on the progressive refractive surface according to Reference Example 1.

[FIG. 5] FIG. 5 illustrates linear weight maps of Example 1 (lower side) and Example 2 (upper side), together with the addition profile of Reference Example 1, in which the left vertical axis indicates a refractive power (D) of the addition profile, the right vertical axis indicates a weight value, and the horizontal axis indicates a distance (mm) from the progression start point to the near vision power measurement reference point on the xy plane coordinate system.

[FIG. 6] FIG. 6 is a planar weight map obtained by expanding the linear weight map of the Example 1 on the xy plane coordinate system with the progression start point being rotationally symmetrical, in which the horizontal axis (the left-right direction on the paper) is the x-axis, the vertical axis (the up-down direction on the paper) is the y-axis, and the three-dimensional direction is the t-axis (wp).

[FIG. 7] FIG. 7 is a view illustrating a state in which continuity of the planar weight map is maintained by smoothing discontinuity of the planar weight map that occurs due to a change in the rate of change, while changing the rate of change to 1 in the upper side (the +y direction) of the horizontal line (the x-axis direction) passing through the progression start point in the planar weight map according to Example 1.

[FIG. 8A] FIG. 8A is a view illustrating an average power distribution on a progressive refractive surface according to Example 1.

[FIG. 8B] FIG. 8B is an astigmatism distribution map on the progressive refractive surface according to Example 1.

[FIG. 9] FIG. 9 is a planar weight map in which the linear weight map of Example 2 is expanded on the xy plane coordinate system with the progression start point being rotationally symmetrical, in which the horizontal axis (the left-right direction on the paper) is the x-axis, the vertical axis (the up-down direction on the paper) is the y-axis, and the three-dimensional direction is the t-axis (wp).

[FIG. 10] FIG. 10 is a view illustrating a state in which continuity of the planar weight map is maintained by smoothing discontinuity of the planar weight map that occurs due to a change in the rate of change, while changing the rate of change to 1 in the upper side (the +y direction) of the horizontal line (the x-axis direction) passing through the progression start point in the planar weight map of Example 2.

[FIG. 11A] FIG. 11A is a view illustrating an average power distribution on a progressive refractive surface according to Example 2.

[FIG. 11B] FIG. 11B is an astigmatism distribution map on the progressive refractive surface according to Example 2.

## Detailed description of the invention

Hereinafter, an embodiment of the present invention will be described. The following description based on the drawings is merely an example, and the present invention is not limited to the illustrated embodiments. In this specification, the term "...to..." refers to a value greater than or equal to a given value and less than or equal to a given value.

## <Definition>

The spectacle lens described in this specification has an object-side surface and an eyeball-side surface. The "object-side surface" refers to a surface that is located on the object side when spectacles equipped with spectacle lenses are worn by a wearer, and the "eyeball-side surface" refers to the opposite, that is, the surface that is located on the eyeball side when spectacles equipped with spectacle lenses are worn by a wearer. The object-side surface may be called an outer surface, and the eyeball-side surface may be called an inner surface.

In this specification, in the direction when facing the outer surface of a spectacle lens (hereinafter, when viewed in a plan view), a left-right direction is the x-direction, up-down direction is the y-direction, and a thickness direction of a spectacle lens, which is perpendicular to the x-direction and y-directions, is the z-direction. The z direction is also the optical axis direction of the spectacle lens. An origin is a lens center. The lens center refers to an optical center or a geometric center of the spectacle lens. In this specification, the optical center and the geometric center are approximately the same as each other.

The right direction (3 o'clock direction) is the +x direction, the left direction (9 o'clock direction) is the -x direction, the top direction (0 o'clock direction) is the +y direction, the bottom direction (6 o'clock direction) is the -y direction, the direction toward the object side is the +z direction, and the opposite direction (toward the back) is the -z direction.

The x direction is also called the x-axis, the y direction is also called the y-axis, and the z direction is also called the z-axis. The content of this paragraph can be rephrased as follows.

"When wearing the spectacle lens, the axis passing through the lens center from the object side toward the eyeball side is the z-axis, the axis from bottom to top and perpendicular to the z-axis is the y-axis, and the axis from left to right and perpendicular to the z-axis is the x-axis."

One aspect of the present invention shows, for example, a progressive power lens having a near portion for viewing an object at a near distance, a distance portion for viewing an object farther than the near distance, and an intermediate portion that progressively increases a refractive power between the two portions. Hereafter, the progressive power lens, that is, a spectacle lens, will be referred to simply as a "lens".

The near portion according to one aspect of the present invention has a refractive power for viewing an object at a near distance. The refractive power is a near vision power, which is the sum of a spherical refractive power S (distance vision power) and an addition power ADD. When the power is measured at least at the near vision power measurement reference point N, it is equal to or greater than the near vision power. The refractive power can be increased even after passing the near vision power measurement reference point N in a direction from the progression start point toward the near vision power measurement reference point N, and it does not matter if the near vision refractive power temporarily exceeds (so-called overshoot) the near vision power. According to one aspect of the present invention, a region having a refractive power of (near vision power -0.12D) or more is regarded as a near portion.

The distance portion according to one aspect of the present invention has a refractive power for viewing an object that is farther than a near distance. The refractive power is a spherical refractive power S (distance vision power). When the power is measured at least at the distance vision power measurement reference point F, it is equal to or less than the spherical refractive power S. In the distance portion according to one aspect of the present invention, the refractive power is approximately constant. According to one aspect of the present invention, a region having a refractive power within a range of (spherical refractive power S$\pm$0.12D) is regarded as a distance portion.

In the intermediate portion, the refractive power gradually changes. The difference between the refractive power for viewing a distant object and the refractive power for viewing a close object is called an addition power ADD (unit: D [diopter]; the same applies hereinafter to the refractive power and dioptric power described in this specification). In this specification, the "refractive power" may be used instead of the so-called diopter or power to generally indicate the degree of refraction of a lens.

In the intermediate portion, the refractive power changes continuously. The intermediate portion may be called a progressive zone. The length of the progression zone is defined as a distance between a progression start point where the change in refractive power begins and a progression end point where it ends.

The distance portion is a region of the progressive power lens that is located at and on the upper side of the progressive power start point. The near portion is a region of the progressive power lens that generally includes the progressive end point and below. The intermediate portion is a region between the distance portion and the near portion, and is a region in which the refractive power changes progressively.

For ease of explanation, for example, one aspect of the present shows a case in which the outer surface is a spherical or toric surface and the inner surface is a progressive surface (so-called inner surface progressive lens). Of course, this is just one example, and the outer surface may be a progressive surface. The progressive surface according to one aspect of the present invention has the following configuration.

On the inner surface of the lens according to one aspect of the present invention, a near vision region for viewing a near distance (eg, 40 cm to 60 cm) is located on the lower side (-y direction) of the lens in a wearing state of the lens.

On the other hand, according to one aspect of the present invention, the distance portion for visually recognizing an object at a distance farther than the near distance is located on the upper side of the near portion (in the +y direction). The distance portion according to one aspect of the present invention is not particularly limited, and may be the portion for a long distance (eg, 2 m to infinity) or for a medium distance (eg, 60 cm to 200 cm).

That is, the lens according to one aspect of the present invention may be an intermediate-near lens for an object distance from an intermediate distance (1 m to 40 cm) to a near distance (40 cm to 10 cm), or a near-near lens for an object distance within the near distance.

For convenience of explanation, one aspect of the present invention shows an example in which the distance portion is a region for a long distance.

In the near portion, a near vision power measurement reference point is set for measuring a reference power. Similarly, in the distance portion as well, a distance vision power measurement reference point is set for measuring a reference power. The power here is a so-called spherical refractive power S. The power at the near vision power measurement reference point is (S+ADD (addition power)).

The "distance vision power measurement reference point" refers to a point at which the spherical refractive power and an astigmatism power described in the prescription data of wearer information are imparted to the progressive power lens. The spherical refractive power refers to a so-called spherical refractive power S (distance vision power S), and the cylindrical refractive power refers to a so-called astigmatism power C. The distance vision power measurement reference point (hereinafter simply referred to as a measurement reference point F or point F) is, for example, a point located on a meridian and 8.0 mm away from a horizontal line connecting the positions of two hidden marks, to the distance portion side.

The "eye point (EP)" is a position through which the line of sight passes when the wearer faces straight ahead while wearing the progressive power lens. Generally, it is placed at a position several mm below the measurement reference point F. The change of the refractive power occurs below this EP. The point where the change of the progressive power starts is also called a progression start point. In this embodiment, the geometric center GC, which is further below the EP, coincides with the progression start point and also coincides with a prism reference point.

The "near vision power measurement reference point" refers to the point where the addition power ADD is added to the spherical refractive power described in the prescription data of the wearer's information, and refers to the point where the spherical refractive power S+ADD is first realized when looking downward from the top of the lens. The near vision power measurement reference point (hereinafter, simply referred to as a measurement reference point N or point N) is also located on the meridian.

Incidentally, prescription data of the wearer's information is written on a lens bag of the progressive power lens. That is, by having the lens bag, the lens can be identified as a progressive power lens based on the prescription data of the wearer's information. The progressive power lens usually comes with the lens bag as a set. Therefore, the technical concept of the present invention is reflected in the progressive power lens attached with a lens bag, and is also reflected in the set of the progressive power lens and lens bag.

Further, the positions of the measurement reference point F, fitting point or eye point EP, and the measurement reference point N can be identified by referring to a remark chart or a centration chart issued by a lens manufacturer. The progression start point can also be identified by using a lens meter for measuring dioptric power.

The "main line of sight" is a trajectory line on a lens surface along which the line of sight moves when an object is viewed straight ahead in the near, distance and intermediate portions of a progressive power lens. The main line of sight is shifted toward a nose in the intermediate and near portions. The distance of this shift toward the nose is called an amount of inset.

The "meridian" refers to a vertical line that is perpendicular to a horizontal line connecting the positions of two hidden marks provided on the progressive power lens and that passes through a midpoint between the positions of the two hidden marks. The meridian corresponds to the y-axis on the distribution map shown in each figure of the present application.

<Method for changing the progressive mode of the progressive power lens according to one aspect of the present invention>

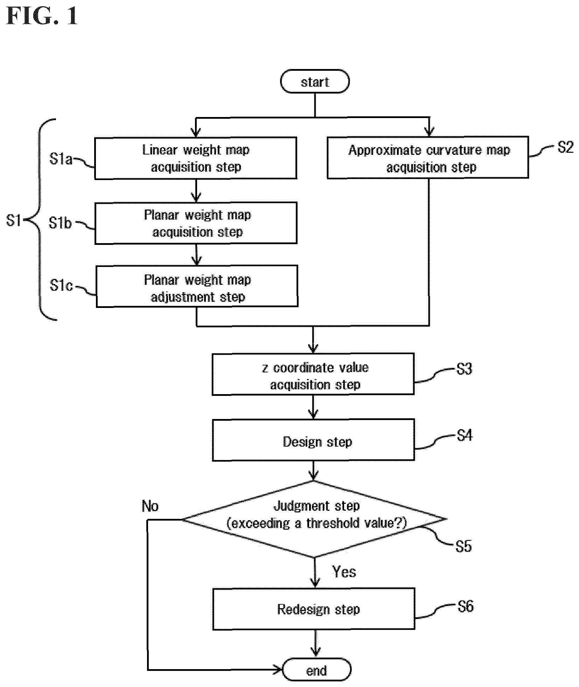

FIG. 1 is a schematic flow chart of a method for changing the progressive mode of the progressive power lens according to one aspect of the present invention.

The method for changing the progressive mode of the progressive power lens according to one aspect of the present invention includes at least the following steps.

* A weight map acquisition step S1 of obtaining a weight map on an xy plane coordinate system for changing from progressive mode 1 to progressive mode 2, the weight map having continuity in all directions on the xy plane coordinate system;

* An approximate curvature map acquisition step S2 of obtaining a distribution map of an approximate curvature Cp on the xy plane coordinate system at each point on a surface $\alpha$ that is a design surface (for example, at least one of the two surfaces, an inner surface according to one aspect of the present invention);

* A z-coordinate value acquisition step S3 of multiplying the approximate curvature $C_p$ at each point on the xy plane coordinate system of the distribution map by the weight $w_p$ corresponding to each point on the weight map to obtain a z-coordinate value $z_{addp}$ using the following formula:

[Formula 5]

$$z_{addp}(x,y) = \frac{c_p(x,y) * w_p(x,y) * (x^2 + y^2)}{1 + \sqrt{1 - \left(c_p(x,y) * w_p(x,y)\right)^2 * (x^2 + y^2)}}$$

…(Equation 1)

and

* A design step S4 of designing a new surface α' based on the z-coordinate value $z_{addp}$ obtained in the z-coordinate value acquisition step.

The approximate curvature $C_p$ is defined as follows: the approximate curvature $C_p$ at an arbitrary point p(x, y, z) on the surface α is calculated by using the reciprocal of the radius of a circle that passes through three points p'(-x, -y, z) and (0, 0, 0) that are rotationally symmetric with respect to the point p in the xy plane perpendicular to the z axis, and when the point p is (0,0,0), an average of the two principal curvatures at the point p on the surface α is used as the approximate curvature $C_p$. The "two principal curvatures" refer to the largest and smallest of the curvatures.

The distribution map of the approximate curvature $C_p$ on the xy plane coordinate system may be referred to as an "approximate curvature map."

This approximate curvature map is a distribution map on the xy plane coordinate system, with a Cp value set as a third axis. To distinguish it from the z-axis described in the <Definition>, the third axis is called the s-axis. According to one aspect of the present invention, the s-axis, similarly to the z-axis, is a normal line on the xy plane, and the origin is a lens center.

The approximate curvature map may be obtained as a distribution map that can be specifically visually recognized, or may be obtained as a distribution map of data.

An already prepared map may be used as the approximate curvature map. The approximate curvature map acquisition step S2 may be performed to obtain the approximate curvature map that has already been obtained. Alternatively, when performing one aspect of the present invention, the approximate curvature may be calculated from the existing planar x, y and z coordinate values at each point. The approximate curvature map acquisition step S2 may be performed to calculate the approximate curvature from the x, y and z coordinate values at each point on the surface α before smoothing.

The weight map according to one aspect of the present invention is used to assign weights to the points corresponding to the xy plane coordinate system in the approximate curvature map. This weight map is a distribution map on the xy plane coordinate system, with the value of the weight $w_p$ set as the third axis. To distinguish it from the z-axis described in the <Definition>, the third axis is called the t-axis. According to one aspect of the present invention, the t-axis, similarly to the z-axis, is a normal line on the xy plane, and the origin is the lens center.

The weight map according to one aspect of the present invention has continuity in all directions on the xy plane coordinate system. This means that the weight map can be expressed as a continuous line (straight line or curved line) on three axes: x, y, and t.

The weight map may be obtained as a distribution map that can be specifically visually recognized, or may be obtained as a distribution map of data.

An already prepared map may be used as the weight map according to one aspect of the present invention. The weight map acquisition step S1 may be performed to obtain an already obtained weight map. Alternatively, the weight map acquisition step S1 may be performed to create a weight map using a technique according to a specific example described below.

The weight map acquisition step S1 may include:

* A linear weight map creation step S1a of obtaining a rate of change of the addition curve of the progressive mode 2 relative to the addition curve of the progressive mode 1 from the progression start point to the near vision power measurement reference point on the xy plane coordinate system, according to a distance from the progression start point to the near vision power measurement reference point on the xy plane coordinate system;

*A planar weight map creation step S1b of developing the relationship between the distance and the rate of change obtained in the creation of the linear weight map, on the xy plane coordinate system, with the progression start point being rotationally symmetrical; and

*A planar weight map adjustment step S1c of maintaining continuity of the planar weight map by smoothing discontinuity of the planar weight map that occurs due to a change in the rate of change, while changing the rate of change to 1 in the upper side of the progression start point (more specifically, in the upper side of the horizontal line passing through the progression start point, in other words, in the distance portion) in the planar weight map obtained in the creation of the planar weight map.

In the planar weight map adjustment step S1c, the continuity may be maintained by smoothing the discontinuity of the surface wight map by multiplying the term relating to the rate of change in the function constituting the planar weight map by 0 when the polar coordinates are $0 \le \theta < \pi$, and by sin2θ when the polar coordinates are $\pi \le \theta < 2\pi$, while converting the xy plane coordinate system to a polar coordinate system in the planar weight map.

Although the above example has been given as one aspect of the present invention as a technique of smoothing the discontinuity of the planar weight map, the technique is not limited thereto. For example, processing using a smoothing filter that is used for image processing may be performed. Also, a known technique relating to B-spline smoothing or polygonal surface smoothing may be employed.

When changing from progressive mode 1 to progressive mode 2, it is preferable that the rate of change of the addition power after the change relative to the addition power before the change is less than 0.125, which does not involve an unreasonable change.

According to one aspect of the present invention, a design step S4 is performed to design a new surface $\alpha'$ based on the z-coordinate value $z_{addp}$ obtained in the z-coordinate value acquisition step S3. Between each of the coordinate values (each of the points), the curved surface may be interpolated by a known method (for example, spline interpolation). When the refractive index of a base material used as a lens base material is a known index, the refractive power at a given location on the surface $\alpha'$ can also be determined.

Although one aspect of the present invention shows a case where the design surface $\alpha$ is an inner progressive surface, the present invention is not limited to this example. For example, the design surface $\alpha$ does not have to be a single specific surface, but a virtual surface having a power distribution and an astigmatism distribution when the object-side surface and the eyeball-side surface are combined, may be used as the design surface $\alpha$ (this content is employed in the Example given later). Then, after the new surface $\alpha'$ is designed in the design step, the contribution of the surface $\alpha'$ to the power distribution and the astigmatism distribution may be shared between the object-side surface and the eyeball-side surface.

Hereinafter, an example will be given to show that one aspect of the present invention is further useful. It is preferable that the method for changing the progressive mode of the progressive power lens according to one aspect of the present invention further includes the following steps.

* Judgment step S5 of judging at least either one (preferably both Judgment 1 and Judgment 2) of whether or not a difference between an addition power on the surface $\alpha'$ designed in the design step and an addition power on the surface $\alpha$ before the smoothing step exceeds a threshold value (judgment 1), or

whether or not a difference between a curvature of the distance portion on the surface $\alpha'$ designed in the design step and a curvature of the distance portion on the surface $\alpha$ before the smoothing step exceeds a threshold value (judgment 2),

and

* redesign step S6 of performing, when it is judged in the judgment step that the threshold value is exceeded, a z-coordinate value reacquisition step to obtain a new z-coordinate value $z_p$ (x, y) at each point using the following formula, to design a surface $\alpha''$ having the z-coordinate value $z_p$ at each point,

[Formula 6]

$$z_p(x,y) = \frac{\left( \dfrac{(c_p(x,y) - c_{fa}) * (c_{nb} - c_{fb})}{c_{na} - c_{fa}} + c_{fb} \right) * (x^2 + y^2)}{1 + \sqrt{1 - \left( \dfrac{(c_p(x,y) - c_{fa}) * (c_{nb} - c_{fb})}{c_{na} - c_{fa}} + c_{fb} \right)^2 * (x^2 + y^2)}}$$

... (Equation 2)

wherein $C_{fb}$ is a curvature of the distance portion before multiplication by the weight wp, and $C_{nb}$ is a curvature of the near portion before multiplication by the weight $w_p$, $C_{fa}$ is a curvature of the distance portion after multiplication by the weight $w_p$, and $C_{na}$ is a curvature of the near portion after multiplication by the weight $w_p$.

The curvature of the distance portion may be rephrased as a distance vision power or spherical refractive power S measured at the distance vision power measurement reference point F.

The addition power on the surface $\alpha'$ designed in the design step often differs from the addition power on the surface $\alpha$ before the smoothing. The same applies to the curvature of the distance portion. The judgment step S5 is to judge whether or not the difference between the surface $\alpha$ and the surface $\alpha'$ is large.

Whether or not this difference is large may be judged based on whether or not the difference exceeds a threshold value. The threshold value for both judgment 1 and judgment 2 may be, for example, 0.25D (preferably, 0.12D, 0.10D, 0.08D, 0.05D, 0.03D, or 0.01D).

When the difference between surfaces $\alpha$ and $\alpha'$ is large, it is preferable to reduce the difference. The specific technique for reducing the difference is defined in the redesign step S6.

According to one aspect of the present invention, the difference in the addition power and/or the curvature of the distance portion between the surfaces $\alpha$ and $\alpha'$ can be reduced to a threshold value or less (or eliminated in some cases) simply by performing the redesign step. This is exactly because, according to one aspect of the present invention, the following technical idea is employed: the approximate curvature map on the xy plane coordinate system is multiplied by the weight map that is the weight map having continuity on the same xy plane coordinate system, based on the concept of "the relationship between the approximate curvature $C_p$ and the z coordinate value $z_{addp}$". This preferable example also contributes greatly to the effect of the present invention, that is, to be able to easily change the shape of the addition profile without causing any design failure. Further, the ease of change contributes greatly to reducing the time required for changing the progressive mode.

According to one example of the present invention, the shape of the addition profile can be easily changed without causing any design failure.

<Modified example, etc.>

One aspect of the present invention has been described above, and the above disclosure shows an exemplary aspect of the present invention. That is, the technical scope of the present invention is not limited to the exemplary aspect described above, and various modifications are possible without departing from the gist of the present invention. Further, the above-described disclosure contents can be arbitrarily selected and combined with the following modified examples.

As an example of the spectacle lens according to one aspect of the present invention, the distance portion for visually recognizing an object that is farther than the near distance has been given. On the other hand, the distance portion may not be a portion intended for stably viewing the object farther than the near distance, but may simply make it possible to view the object farther than the near distance.

The distance portion in the spectacle lens according to one aspect of the present invention may be a narrow portion. For example, the lens may be a progressive power lens having a configuration in which the refractive power progresses not only downward from the progression start point but also upward (in most cases, the refractive power decreases toward the upper side). In this case, a distance vision power measurement reference point is provided on the progressive power lens, but this is merely a reference point for checking whether or not a refractive power for a specified distance is secured, and a wide distance portion is not required. An example of such a spectacle lens is the product name Lecture (registered trademark) TF.

The change of the progressive mode is not limited to an increase or decrease of the addition power. For example, the change of power may be gradual in the vicinity of the near portion in the intermediate portion, or conversely, the change of power may be gradual in the vicinity of the distance portion in the intermediate portion while the change of power is larger in the vicinity of the near portion in the intermediate portion. In any case, according to one aspect of the present invention, the relationship between the approximate curvature and the z coordinate value is used as a parameter for changing the progressive mode. Based on this relationship, the weight map is also used for the assigning weight. Then, weight is assigned to the approximate curvature on the xy plane coordinate system. As long as the above technical concept is followed, any change of the progressive mode can be easy without causing any design failure. In this respect, the technical significance of the present invention is extremely great.

Although the case where the approximate curvature is used has been exemplified as one aspect of the present invention, the z coordinate itself may be used instead of the approximate curvature. That is, instead of the approximate curvature map, a z-coordinate value map on the xy plane may be obtained and used. The configuration reflecting this technical idea is as follows: The following configuration is applicable not only to the method for changing the progressive mode, but also to the manufacturing method, system, and program described below.

"A method for changing the progressive mode of a progressive power lens having an object-side surface and an eyeball-side surface, a near portion for visually recognizing an object at a near distance, a far portion for visually recognizing an object at a distance farther than the near distance, and an intermediate portion for progressively increasing the refractive power between the near and far portions,
the method including:

obtaining a weight map on an xy plane coordinate system for changing from progressive mode 1 to progressive mode 2, the weight map having continuity in all directions on the xy plane coordinate system;
obtaining a distribution map of a z-coordinate value on the xy plane coordinate system at each point on a surface $\alpha$ which is a design surface;
multiplying the z-coordinate value on the xy plane coordinate system of the distribution map by the weight $w_p$ corresponding to each point on the weight map to obtain a z-coordinate value $z_{addp}$; and
designing a new surface $\alpha'$ based on the z-coordinate value $z_{addp}$ obtained in the obtaining the z-coordinate value",
wherein when wearing spectacles, an axis passing through a lens center from the object side toward the eyeball side is the z-axis, an axis perpendicular to the z-axis from bottom to top is the y-axis, and an axis perpendicular to the z-axis from left to right is the x-axis.

The technical concept of the present invention is also reflected in the method for manufacturing a spectacle lens, in which a lens base material is processed so as to realize a surface designed by the method for changing the progressive power mode of a progressive power lens according to one aspect of the present invention.

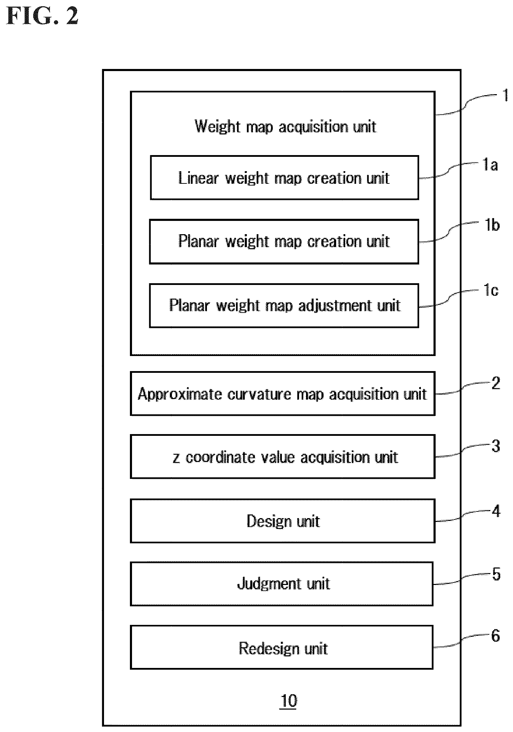

FIG. 2 is a schematic block diagram of a system for changing the progressive mode of the progressive power lens according to one aspect of the present invention.

The technical concept of the present invention can also be applied to a system 10 for changing the progressive mode of the progressive power lens. An example of the configuration is as follows.

"A system 10 for changing a progressive mode of a progressive power lens having an object side surface and an eyeball side surface, a near portion for visually recognizing an object at a near distance, a distance portion for visually recognizing an object farther than the near distance, and an intermediate portion for progressively increasing the refractive power between the near and far portions, the system including:

a weight map acquisition unit 1 that obtains a weight map on an xy plane coordinate system for changing from progressive mode 1 to progressive mode 2, the weight map having continuity in all directions on a xy plane coordinate system;

an approximate curvature map acquisition unit 2 that obtains a distribution map of an approximate curvature $C_p$ on the xy plane coordinate system, at each point on the surface $\alpha$, which is a design surface; and

a z-coordinate value acquisition unit that multiplies the approximate curvature $C_p$ at each point on the xy plane coordinate system of the distribution map by weight $w_p$ corresponding to each point on the weight map, to obtain a z-coordinate value $z_{addp}$ by the above formula 1; and

a design unit 4 that designs a new surface $\alpha'$ based on the z coordinate value $z_{addp}$ obtained by the z coordinate acquisition unit.

The content performed by the weight map acquisition unit 1 is the same as the content performed by the weight map acquisition step described above, and therefore the description thereof will be omitted. The content performed by the approximate curvature map acquisition unit 2 is the same as the content performed by the approximate curvature map acquisition step described above, and therefore the description thereof will be omitted. The content performed by the z-coordinate value acquisition unit 3 is the same as the content performed by the z-coordinate value acquisition step described above, and therefore the description thereof will be omitted. The content performed by the design unit 4 is the same as the content performed by the above-described design step, and therefore the description thereof will be omitted.

A calculation unit in the computer may play the roles of the weight map acquisition unit 1, approximate curvature map acquisition unit 2, z-coordinate value acquisition unit 3, and design unit 4 (as well as the linear weight map creation unit 1a, planar weight map creation unit 1b, planar weight map adjustment unit 1c, judgment unit 5, and redesign unit 6 described below), or a control computer unit including the calculation unit may play these roles.

The control computer unit functions as a computer device that performs information processing instructed by a specified program, and is specifically composed of a combination of a CPU (Central Processing Unit), HDD (Hard disk drive), ROM (Read Only Memory), RAM (Random Access Memory), external interface (I/F), etc.

The system 10 for changing the progressive mode of the progressive power lens according to one aspect of the present invention preferably also includes the following configuration.

"The weight map acquisition unit 1 includes:

a linear weight map creation unit 1a that obtains a rate of change of an addition curve of progressive mode 2 relative to an addition curve of progressive mode 1 from a progression start point to a near vision power measurement reference point on an xy plane coordinate system, according to a distance from the progression start point to the near vision power measurement reference point on the xy plane coordinate system;

a planar weight map creation unit 1b that develops a relationship between the distance and the rate of change obtained by the linear weight map creation unit on an xy plane coordinate system, with the progression start point being rotationally symmetrical; and

a planar weight map adjustment unit 1c that maintains continuity of the planar weight map by smoothing discontinuity of the planar weight map that occurs due to a change in the rate of change, while changing the rate of change to 1 in the upper side of the progression start point in the planar weight map obtained in the planar weight map creation unit."

The system 10 for changing the progressive mode of a progressive power lens according to one aspect of the present invention preferably also has the following configuration.

* A judgment unit 5 that judges at least either one of whether or not a difference between an addition power on the surface $\alpha'$ designed by the design unit and an addition power on the surface $\alpha$ before multiplication by the weight $w_p$ exceeds a threshold value or whether or not a difference between a curvature of a distance portion in the surface $\alpha'$ designed by the design unit and a curvature of a distance portion in the surface $\alpha$ before multiplication by the weight $w_p$ exceeds a threshold value, and

* a redesign unit 6 that, when it is judged by the judgment unit that the threshold value is exceeded, obtains a new z coordinate value $z_p(x, y)$ at each point using the above formula 2 and designs a surface $\alpha''$ having a z coordinate value $z_p$ at each point.

The technical concept of the present invention can also be applied to a program for the system 10 for changing the progressive mode of a progressive power lens. An example of the configuration is as follows.

"A program for a system for changing a progressive mode of a progressive power lens having an object-side surface and an eyeball-side surface, a near portion for visually recognizing an object at a near distance, a distance portion for visually recognizing an object at a distance farther than the near distance, and an intermediate portion for progressively increasing a refractive power between the near portion and the distance portion, the program causing a computer to function as:

a weight map acquisition unit 1 that obtains a weight map on an xy plane coordinate system for changing from progressive mode 1 to progressive mode 2, the weight map having continuity in all directions on the xy plane coordinate system;

an approximate curvature map acquisition unit 2 that obtains a distribution map of an approximate curvature $C_p$ on the xy plane coordinate system, at each point on the surface $\alpha$, which is a design surface;

a z-coordinate value acquisition unit 3 that multiplies the approximate curvature $C_p$ at each point on the xy plane coordinate system of the distribution map by the weight $w_p$ corresponding to each point on the weight map to obtain a z-coordinate value $z_{addp}$ using the above formula 1; and

a design unit 4 that designs a new surface $\alpha'$ based on the z coordinate value $z_{addp}$ obtained by the z coordinate acquisition unit."

The program for the system 10 for changing the progressive mode of the progressive power lens according to one aspect of the present invention preferably causes the computer to function as the linear weight map creation unit 1a, the planar weight map creation unit 1b, the planar weight map adjustment unit 1c, the judgment unit 5, and the redesign unit 6.

[Examples]

The present invention will be specifically described below using examples, but the present invention is not limited to the following examples in any way.

<Reference Example 1>

As a target for being subjected to smoothing according to one aspect of the present invention, a progressive refractive surface was prepared as a design surface rather than a specific outer or inner surface. This progressive refractive surface corresponds to an original progressive refractive surface described in WO97/019382. The technique described in this publication may be employed as a specific method for applying this original progressive refractive surface to the lens surface.

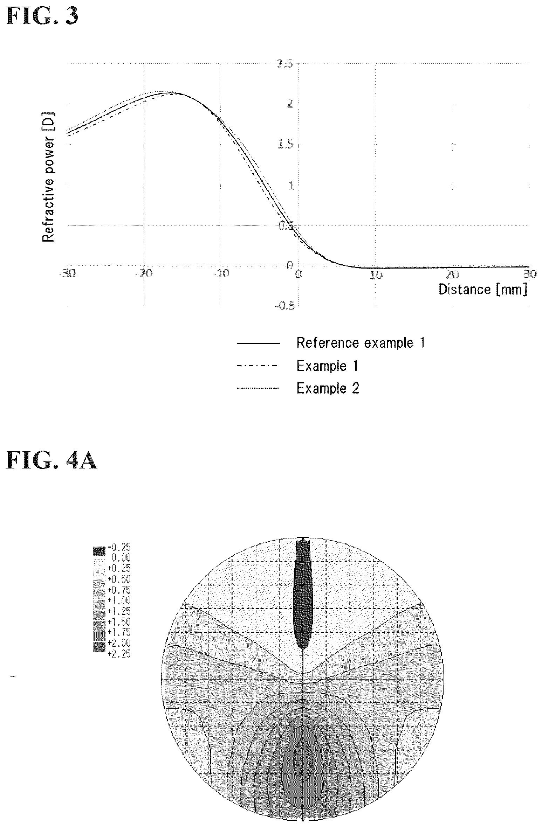

FIG. 3 is an addition profile according to Reference Example 1 (solid line), Example 1 (10% reduction in ADD) (dashed line), and Example 2 (10% increase in ADD) (dotted line).

FIG. 4A is an average power distribution map on a progressive refractive surface according to Reference Example 1.

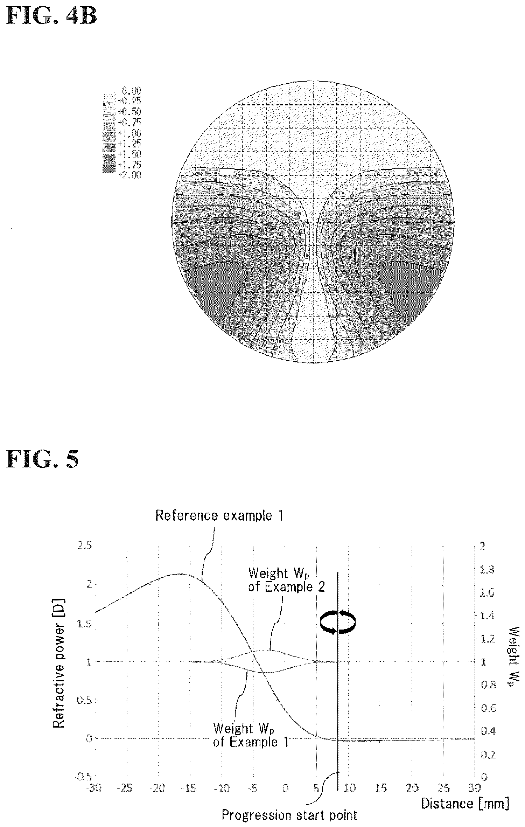

FIG. 4B is an astigmatism distribution map on the progressive refractive surface according to Reference Example 1.

The pitch in the average power distribution map and astigmatism distribution map described below is 0.25D.

In the progressive refractive surface according to Reference Example 1, the spherical refractive power S was 0 D, the astigmatism power C was 0 D, and the addition power ADD was 2.00 D. An approximate curvature map on the progressive refractive surface was also obtained.

<Example 1>

Based on the method for changing the progressive mode of the progressive power lens described as one aspect of the present invention, the progressive refractive surface of Reference Example 1 (progressive mode 1) was changed to a state in which the addition power ADD was reduced by 10% (progressive mode 2). The details of the weight map acquisition step are as follows.

FIG. 5 illustrates linear weight maps of Example 1 (lower side) and Example 2 (upper side), together with the addition profile of Reference Example 1, in which the left vertical axis indicates the refractive power (D) of the addition profile, the right vertical axis indicates a weight value, and the horizontal axis indicates a distance (mm) from the progression start point to the near vision power measurement reference point on the xy plane coordinate system. The weight represents the rate of change of the addition curve of the progressive mode 2 relative to the addition curve of the progressive mode 1 from the progression start point to the near vision power measurement reference point on the xy plane coordinate system. In this manner, the linear weight map creation step S1a is performed.

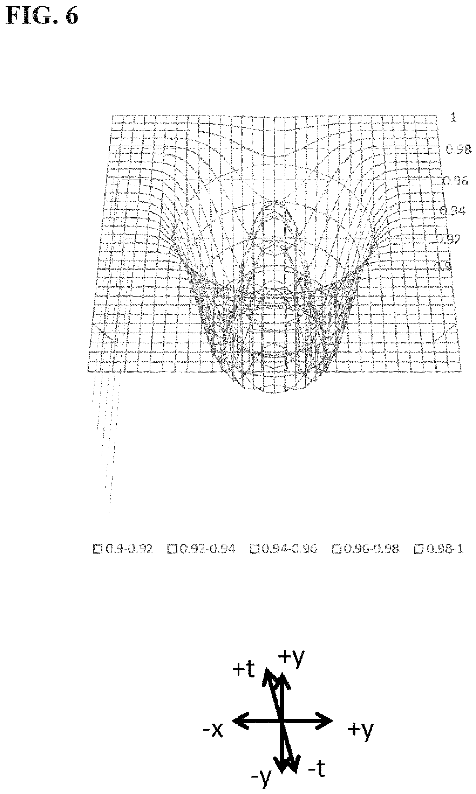

FIG. 6 is a planar weight map obtained by expanding the linear weight map of Example 1 on the xy plane coordinate system with the progression start point being rotationally symmetrical, in which the horizontal axis (the left-right direction on the paper) is the x-axis, the vertical axis (the up-down direction on the paper) is the y-axis, and the three-dimensional direction is the t-axis ($w_p$). In this manner, the planar weight map creation step S1b is performed.

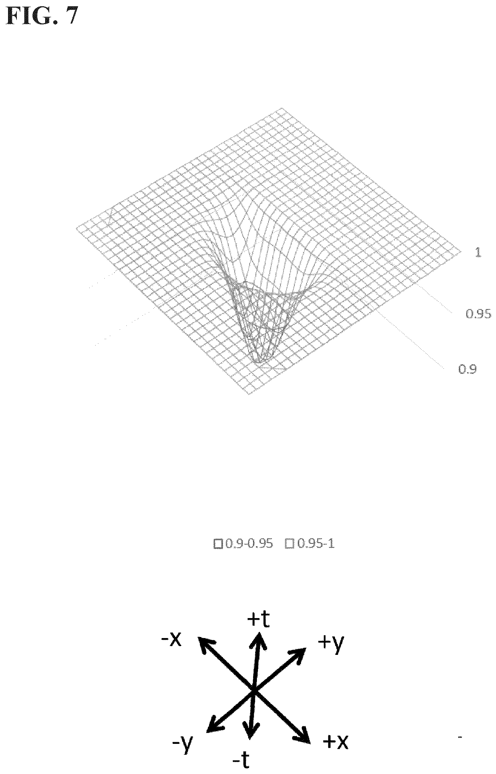

FIG. 7 is a view illustrating a state in which continuity of the planar weight map is maintained by smoothing discontinuity of the planar weight map that occurs due to a change in the rate of change, while changing the rate of change to 1 in the upper side (the +y direction) of the horizontal line (the x-axis direction) passing through the progression start point in the planar weight map according to Example 1. In this manner, the planar weight map adjustment step S1c is performed.

Specifically, in the planar weight map adjustment step S1c, the continuity is maintained by smoothing discontinuity of the planar weight map while converting the xy plane coordinate system in the planar weight map to a polar coordinate, and multiplying a term relating to the rate of change in a function constituting the planar weight map by 0 when the polar coordinate is $0 \leq \theta < \pi$, and multiplying it by $\sin^2 \theta$ when the polar coordinate is $\pi \leq \theta < 2\pi$.

The z-coordinate value acquisition step S3 was performed to multiply the approximate curvature $C_p$ at each point on the xy plane coordinate system of the distribution map by the weight $w_p$ corresponding to each point on the weight map to obtain the z-coordinate value $z_{addp}$ using the following formula, and the design step S4 was performed to design a new surface $\alpha'$ based on the z-coordinate value $z_{addp}$ obtained in the z-coordinate value acquisition step S3.

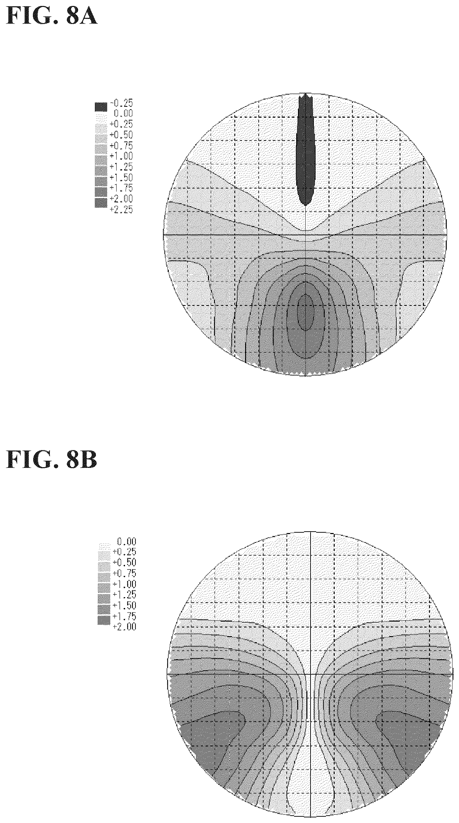

FIG. 8A is a view illustrating an average power distribution of a progressive refractive surface according to Example 1.

FIG. 8B is an astigmatism distribution map on the progressive refractive surface according to Example 1.

In this example, the shape of the addition profile could be easily changed without causing any design failure. This is because the approximate curvature is used. In other words, this means that due to the parameter of the approximate curvature, the progressive mode of the progressive power lens can be changed without causing any design failure due to the change of the progressive mode. This effect also applies to the examples described below.

<Example 2>

In this example, the progressive refractive surface (progressive mode 1) of Reference Example 1 was changed to a state in which the addition power ADD was increased by 10% (progressive mode 2'). The rest was the same as in Example 1.

As illustrated in FIG. 5, the linear weight map creation step S1a is performed.

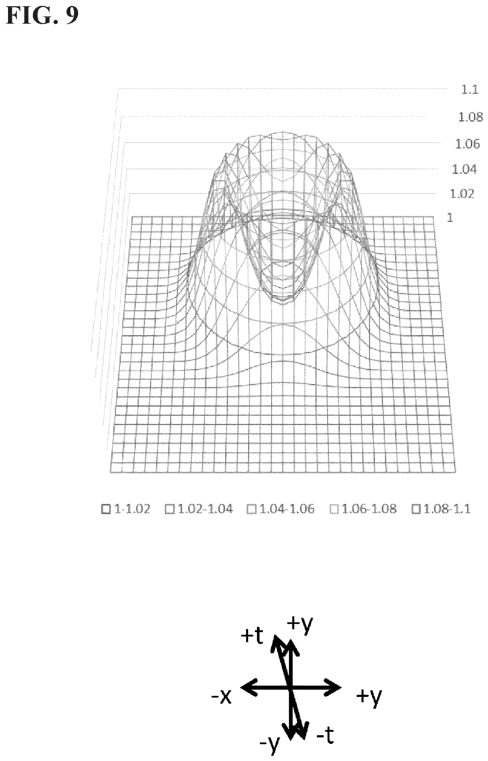

FIG. 9 is a planar weight map obtained by expanding the linear weight map of Example 2 on the xy plane coordinate system with the progression start point being rotationally symmetrical, in which the horizontal axis (the left-right direction on the paper) is the x-axis, the vertical axis (the up-down direction on the paper) is the y-axis, and the three-dimensional direction is the t-axis ($w_p$). In this manner, the planar weight map creation step S1b is performed.

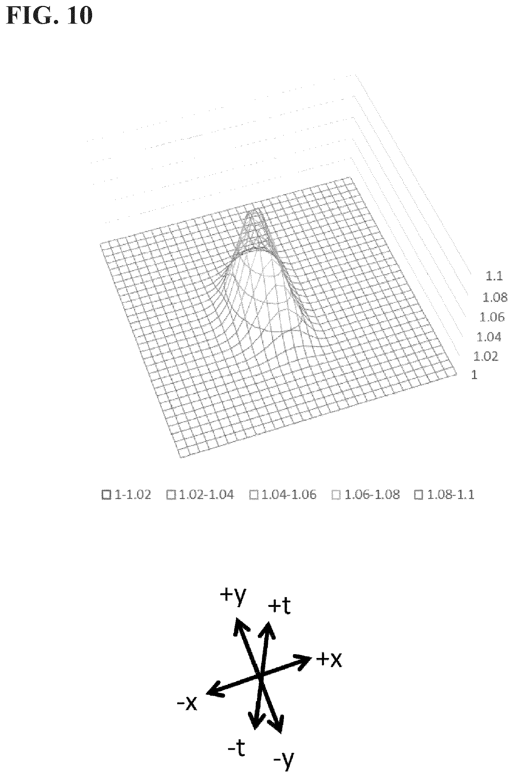

FIG. 10 is a view illustrating a state in which continuity of the planar weight map is maintained by smoothing discontinuity of the planar weight map that occurs due to a change in the rate of change, while changing the rate of change to 1 in the upper side (the +y direction) of the horizontal line (the x-axis direction) passing through the progression start point in the planar weight map in Example 2. In this manner, the planar weight map adjustment step S1c is performed.

Specifically, in the planar weight map adjustment step S1c, the continuity was maintained by smoothing the discontinuity of the planar wight map by multiplying the term relating to the rate of change in the function constituting the planar weight map by 0 when the polar coordinates are $0 \leq \theta < \pi$, and by $\sin^2 \theta$ when the polar coordinates are $\pi \leq \theta < 2\pi$, while converting the xy plane coordinate system to a polar coordinate system in the planar weight map.

The z-coordinate value acquisition step S3 was performed to multiply the approximate curvature $C_p$ at each point on the xy plane coordinate system of the distribution map by the weight $w_p$ corresponding to each point on the weight map to obtain the z-coordinate value $z_{addp}$ using the following formula, and the design step S4 was performed to design a new surface $\alpha'$ based on the z-coordinate value $z_{addp}$ obtained in the z-coordinate value acquisition step S3.

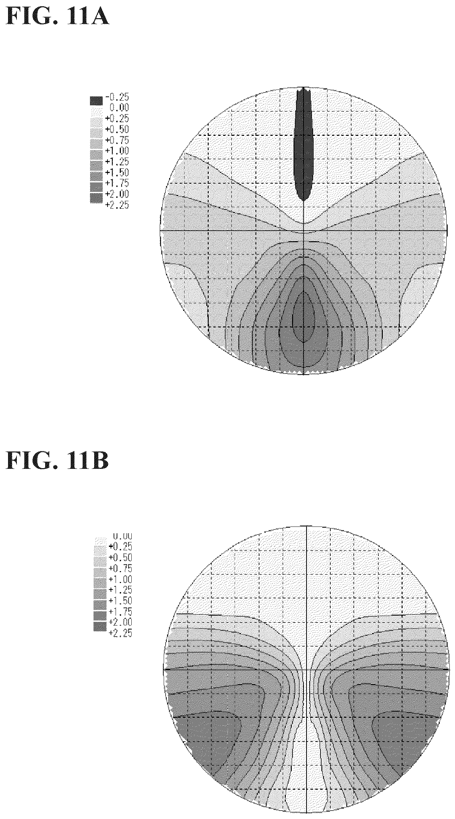

FIG. 11A is an average power distribution map on the progressive refractive surface according to Example 1.

FIG. 11B is an astigmatism distribution map on the progressive refractive surface according to Example 2.

In this example as well, the shape of the addition profile could be easily changed without causing any design failure. Incidentally, in Example 1, a relatively wide clear vision area (area where astigmatism is 0.25 D or less) was obtained in the area where the distance portion and the intermediate portion were connected, and in Example 2, a relatively wide clear vision area was obtained in the area where the near portion and the intermediate portion were connected.

Description of signs and numerals

| | |
|---|---|
| 10 | System for changing the progressive mode of a progressive power lens |
| 1 | Weight map acquisition unit |
| 1a | Linear weight map creation unit |
| 1b | Planar weight map creation unit |
| 1c | Planar weight map adjustment unit |
| 2 | Approximate curvature map acquisition unit |
| 3 | Z coordinate value acquisition unit |
| 4 | Design unit |
| 5 | Determination unit |
| 6 | Redesign unit |

**Claims**

1. A method for changing a progressive mode of a progressive power lens having an object side surface and an eyeball side surface, a near portion for visually recognizing an object at a near distance, a distance portion for visually recognizing an object farther than the near distance, and an intermediate portion for progressively increasing a refractive power between the near portion and the distance portion,
the method comprising:

    obtaining a weight map on an xy plane coordinate system for changing from progressive mode 1 to progressive mode 2, the weight map having continuity in all directions on the xy plane coordinate system;
    obtaining a distribution map of an approximate curvature $C_p$ at each point on a surface $\alpha$, which is a design surface, on the xy plane coordinate system;
    multiplying the approximate curvature $C_p$ at each point on the xy plane coordinate system of the distribution map by weight $w_p$ at each point on the weight map to obtain a z-coordinate value $z_{addp}$ using the following formula:

    [Formula 1]

$$z_{addp}(x,y) = \frac{c_p(x,y) * w_p(x,y) * (x^2 + y^2)}{1 + \sqrt{1 - \left(c_p(x,y) * w_p(x,y)\right)^2 * (x^2 + y^2)}}$$

    and
    designing a new surface $\alpha'$ based on the z-coordinate value $z_{addp}$ obtained in the obtaining the z-coordinate value, wherein when wearing spectacles, an axis passing through a lens center from an object side toward an eyeball side is z-axis, an axis extending from bottom to top and perpendicular to the z-axis is y-axis, and an axis extending from left to right and perpendicular to the z-axis is x-axis, and
    the approximate curvature $C_p$ is defined as follows:
    the approximate curvature $C_p$ at an arbitrary point p(x, y, z) on the surface $\alpha$ is calculated by using a reciprocal of a radius of a circle that passes through three points p'(-x, -y, z) and (0, 0, 0) that are rotationally symmetric with respect to the point p in an xy plane perpendicular to the z axis, and when the point p is (0,0,0), an average of two principal curvatures at the point p on the surface $\alpha$ is used as the approximate curvature $C_p$.

2. The method for changing a progressive mode of a progressive power lens according to claim 1,
wherein the obtaining the weight map includes:

    creating a linear weight map by obtaining a rate of change of an addition curve of the progressive mode 2 relative to an addition curve of the progressive mode 1 from a progression start point to a near vision power measurement reference point on the xy plane coordinate system, according to a distance from the progression start point to the near vision power measurement reference point on the xy plane coordinate system;

creating a planar weight map by expanding a relationship between the distance and the rate of change obtained in the creation of the linear weight map, with the progression start point being rotationally symmetric on the xy plane coordinate system; and

adjusting the planar weigh map to maintain continuity by smoothing discontinuity of the planar weight map that occurs due to the change in the rate of change, in the planar weight map obtained by the creating the planar weight map, while changing the rate of change to 1 in an upper side of a progression start point in the planar weight map.

3. The method for changing a progressive mode of a progressive power lens according to claim 2, wherein in the adjustment of the planar weight map, the continuity is maintained by smoothing discontinuity of the planar weight map while converting the xy plane coordinate system in the planar weight map to a polar coordinate, and multiplying a term relating to the rate of change in a function constituting the planar weight map by 0 when the polar coordinate is $0 \leq \theta < \pi$, and multiplying it by $\sin^2 \theta$ when the polar coordinate is $\pi \leq \theta < 2\pi$.

4. The method for changing a progressive mode of a progressive power lens according to claim 1 or 2, wherein when changing from the progressive mode 1 to the progressive mode 2, the rate of change of an addition power after change to an addition power before change is less than 0.125.

5. The method for changing a progressive mode of a progressive power lens according to claim 1 or 2,

   wherein the near portion is a region having a refractive power of (spherical refractive power S + addition power ADD - 0.12D) or more, and

   the distance portion is a portion for visually recognizing an object farther than a near distance, and is a region having a refractive power within a range of (spherical refractive power S $\pm$ 0.12D).

6. The method for changing a progressive mode of a progressive power lens according to claim 5, the method comprising:

   judging at least either one of whether or not a difference between an addition power on the surface $\alpha'$ designed in the designing the new surface $\alpha'$ and an addition power on the surface $\alpha$ before being multiplied by the weight $w_p$ exceeds a threshold value or whether or not a difference between a curvature of the distance portion in the surface $\alpha'$ designed in the designing the new surface $\alpha'$ and a curvature of the distance portion in the surface $\alpha$ before multiplication by the weight $w_p$ exceeds a threshold value,

   wherein when it is judged in the judgment that the threshold value is exceeded, redesigning is performed to obtain a new z coordinate value $z_p$ (x, y) at each point using the following formula, to design a surface $\alpha''$ having the z coordinate value $z_p$ at each point.

   [Formula 2]

$$z_p(x,y) = \frac{\left( \frac{\left( c_p(x,y) - c_{fa} \right) * \left( c_{nb} - c_{fb} \right)}{c_{na} - c_{fa}} + c_{fb} \right) * (x^2 + y^2)}{1 + \sqrt{1 - \left( \frac{\left( c_p(x,y) - c_{fa} \right) * \left( c_{nb} - c_{fb} \right)}{c_{na} - c_{fa}} + c_{fb} \right)^2 * (x^2 + y^2)}}$$

   wherein $C_{fb}$ is a curvature of the distance portion before multiplication by the weight $w_p$, and $C_{nb}$ is a curvature of the near portion before multiplication by the weight wp, $C_{fa}$ is a curvature of the distance portion after multiplication by the weight $w_p$, and $C_{na}$ is a curvature of the near portion after multiplication by the weight $w_p$.

7. A method for changing a progressive mode of a progressive power lens having an object-side surface and an eyeball-side surface, a near portion for visually recognizing an object at a near distance, a distance portion for visually recognizing an object at a distance farther than the near distance, and an intermediate portion for progressively increasing a refractive power between the near portion and the distance portion, the method comprising:

obtaining a weight map on an xy plane coordinate system for changing from progressive mode 1 to progressive mode 2, the weight map having continuity in all directions on the xy plane coordinate system;

obtaining a distribution map of z-coordinate values on the xy plane coordinate system at each point on a surface $\alpha$ which is a design surface;

obtaining a z-coordinate value $z_{addp}$ by multiplying the z-coordinate value on the xy plane coordinate system of the distribution map by weight $w_p$ corresponding to each point on the weight map; and

designing a new surface $\alpha$' based on the z-coordinate value $z_{addp}$ obtained in the obtaining the z-coordinate value, wherein when wearing spectacles, an axis passing through a lens center from an object side toward an eyeball side is z-axis, an axis perpendicular to the z-axis from bottom to top is y-axis, and an axis perpendicular to the z-axis from left to right is x-axis.

8.  A system for changing a progressive mode of a progressive power lens having an object-side surface and an eyeball-side surface, a near portion for visually recognizing an object at a near distance, a distance portion for visually recognizing an object at a distance farther than the near distance, and an intermediate portion for progressively increasing a refractive power between the near portion and the distance portion, the system comprising:

a weight map acquisition unit that obtains a weight map on an xy plane coordinate system for changing from progressive mode 1 to progressive mode 2, the weight map having continuity in all directions on a xy plane coordinate system;

an approximate curvature map acquisition unit that obtains a distribution map of an approximate curvature $C_p$ on the xy plane coordinate system, at each point on the surface $\alpha$, which is a design surface; and

a z-coordinate value acquisition unit that multiplies the approximate curvature $C_p$ at each point on the xy plane coordinate system of the distribution map by weight $w_p$ corresponding to each point on the weight map, to obtain a z-coordinate value $z_{addp}$ using the following formula:

[Formula 3]

$$z_{addp}(x, y) = \frac{c_p(x, y) * w_p(x, y) * (x^2 + y^2)}{1 + \sqrt{1 - \left(c_p(x, y) * w_p(x, y)\right)^2 * (x^2 + y^2)}}$$

and

a design unit that designs a new surface $\alpha$' based on the z-coordinate value $z_{addp}$ obtained by the z-coordinate value acquisition unit,

wherein when wearing spectacles, an axis passing through a lens center from an object side toward an eyeball side is z-axis, an axis perpendicular to the z-axis from bottom to top is y-axis, and an axis perpendicular to the z-axis from left to right is x-axis, and

the approximate curvature $C_p$ is defined as follows,

the approximate curvature $C_p$ at an arbitrary point p(x, y, z) on the surface $\alpha$ is calculated by using a reciprocal of a radius of a circle that passes through three points p'(-x, -y, z) and (0, 0, 0) that are rotationally symmetric with respect to the point p in the xy plane perpendicular to the z axis, and when the point p is (0,0,0), an average of two principal curvatures at the point p on the surface $\alpha$ is used as the approximate curvature $C_p$.

9.  The system for changing a progressive mode of a progressive power lens according to claim 8, wherein the weight map acquisition unit comprises:

a linear weight map creation unit that obtains a rate of change of an addition curve of progressive mode 2 relative to an addition curve of progressive mode 1 from a progression start point to a near vision power measurement reference point on an xy plane coordinate system, according to a distance from the progression start point to the near vision power measurement reference point on the xy plane coordinate system;

a planar weight map creation unit that develops a relationship between the distance and the rate of change obtained by the linear weight map creation unit, with the progression start point being rotationally symmetrical, on the xy plane coordinate system; and

a planar weight map adjustment unit that maintains continuity of the planar weight map by smoothing discontinuity of the planar weight map that occurs due to a change in the rate of change, while changing the rate of change to 1 in an upper side of the progression start point in the planar weight map obtained by the planar weight map creation unit.

**10.** The system for changing a progressive mode of a progressive power lens according to claim 8 or 9, the system comprising:

a judgment unit that judges at least either one of whether or not a difference between an addition power on the surface $\alpha'$ designed by the design unit and an addition power on the surface $\alpha$ before being multiplied by the weight $w_p$ exceeds a threshold value or whether or not a difference between a curvature of the distance portion in the surface $\alpha'$ designed by the design unit and a curvature of the distance portion in the surface $\alpha$ before multiplication by the weight $w_p$ exceeds a threshold value; and
a redesign unit that obtains, when it is judged by the judgment unit that the threshold value is exceeded, a new z coordinate values $z_p$ (x, y) at each point using the following formula, to design a surface $\alpha''$ having the z coordinate value $z_p$ at each point.

**11.** A program for a system for changing a progressive mode of a progressive power lens having an object-side surface and an eyeball-side surface, and having a near portion for visually recognizing an object at a near distance, a distance portion for visually recognizing an object at a distance farther than the near distance, and an intermediate portion for progressively increasing a refractive power between the near portion and the distance portion, the program causing a computer to function as:

a weight map acquisition unit that obtains a weight map on an xy plane coordinate system for changing from progressive mode 1 to progressive mode 2, the weight map having continuity in all directions on a xy plane coordinate system;
an approximate curvature map acquisition unit that obtains a distribution map of an approximate curvature $C_p$ on the xy plane coordinate system, at each point on the surface $\alpha$, which is a design surface; and
a z-coordinate value acquisition unit that multiplies the approximate curvature $C_p$ at each point on the xy plane coordinate system of the distribution map by weight $w_p$ corresponding to each point on the weight map, to obtain a z-coordinate value $z_{addp}$ using the following formula:

[Formula 4]

$$z_{addp}(x, y) = \frac{c_p(x, y) * w_p(x, y) * (x^2 + y^2)}{1 + \sqrt{1 - \left(c_p(x, y) * w_p(x, y)\right)^2 * (x^2 + y^2)}}$$

and
a design unit that designs a new surface $\alpha'$ based on the z-coordinate value $z_{addp}$ obtained by the z-coordinate value acquisition unit,
wherein when wearing spectacles, an axis passing through a lens center from an object side toward an eyeball side is z-axis, an axis perpendicular to the z-axis from bottom to top is y-axis, and an axis perpendicular to the z-axis from left to right is x-axis, and
the approximate curvature $C_p$ is defined as follows,
the approximate curvature $C_p$ at an arbitrary point p(x, y, z) on the surface $\alpha$ is calculated by using a reciprocal of a radius of a circle that passes through three points p'(-x, -y, z) and (0, 0, 0) that are rotationally symmetric with respect to the point p in the xy plane perpendicular to the z axis, and when the point p is (0,0,0), an average of two principal curvatures at the point p on the surface $\alpha$ is used as the approximate curvature $C_p$.

**12.** A program for changing a system for changing a progressive mode of a progressive power lens according to claim 11, wherein the weight acquisition unit includes:

a linear weight map creation unit that obtains a rate of change of an addition curve of the progressive mode 2 relative to an addition curve of the progressive mode 1 from a progression start point to a near vision power measurement reference point on the xy plane coordinate system, according to a distance from the progression start point to the near vision power measurement reference point on the xy plane coordinate system;
a planar weight map creation unit that develops a relationship between the distance and the rate of change obtained by the linear weight map creation unit on the xy plane coordinate system, with the progression start point being rotationally symmetrical; and

a planar weight map adjustment unit that maintains continuity of the planar weight map by smoothing discontinuity of the planar weight map that occurs due to a change in the rate of change, while changing the rate of change to 1 in an upper side of the progression start point in the planar weight map obtained by the planar weight map creation unit.

13. A program for changing a system for changing a progressive mode of a progressive power lens according to claim 11 or 12, the program causing a computer to function as:

a judgment unit that judges at least either one of whether or not a difference between an addition power on the surface $\alpha'$ designed by the design unit and an addition power on the surface $\alpha$ before being multiplied by the weight $w_p$ exceeds a threshold value or whether or not a difference between a curvature of the distance portion in the surface $\alpha'$ designed by the design unit and a curvature of the distance portion in the surface $\alpha$ before multiplication by the weight $w_p$ exceeds a threshold value; and

a redesign unit that obtains, when it is judged by the judgment unit that the threshold value is exceeded, a new z coordinate value $z_p$ (x, y) at each point using the following formula, to design a surface $\alpha''$ having the z coordinate value $z_p$ at each point.

**FIG. 1**

```
                              ( start )
                                  |
         +------------------------+------------------------+
         |                                                 |
S1a ~ +------------------------+          +------------------------+ ~ S2
      | Linear weight map      |          | Approximate curvature map |
      | acquisition step       |          | acquisition step          |
      +------------------------+          +------------------------+
         |                                                 |
S1  S1b ~ +------------------------+                        |
        | Planar weight map      |                          |
        | acquisition step       |                          |
        +------------------------+                          |
         |                                                  |
S1c ~ +------------------------+                            |
      | Planar weight map      |                            |
      | adjustment step        |                            |
      +------------------------+                            |
         |                                                  |
         +--------------------+-----------------------------+
                              |
                   +------------------------+ ~ S3
                   | z coordinate value     |
                   | acquisition step       |
                   +------------------------+
                              |
                   +------------------------+ ~ S4
                   | Design step            |
                   +------------------------+
                              |
        No        <  Judgment step            > ~ S5
      +-----------(  (exceeding a threshold value?)  )
      |            <                          >
      |                       | Yes
      |            +------------------------+ ~ S6
      |            | Redesign step          |
      |            +------------------------+
      |                       |
      +----------------->( end )
```

## FIG. 2

Weight map acquisition unit — 1

Linear weight map creation unit — 1a

Planar weight map creation unit — 1b

Planar weight map adjustment unit — 1c

Approximate curvature map acquisition unit — 2

z coordinate value acquisition unit — 3

Design unit — 4

Judgment unit — 5

Redesign unit — 6

<u>10</u>

FIG. 3

Refractive power [D]

Distance [mm]

——— Reference example 1
– – – – – – Example 1
················ Example 2

FIG. 4A

-0.25
0.00
+0.25
+0.50
+0.75
+1.00
+1.25
+1.50
+1.75
+2.00
+2.25

## FIG. 4B

## FIG. 5

**FIG. 6**

□ 0.9-0.92　□ 0.92-0.94　□ 0.94-0.96　□ 0.96-0.98　□ 0.98-1

**FIG. 7**

☐ 0.9-0.95   ☐ 0.95-1

EP 4 682 622 A1

## FIG. 8A

## FIG. 8B

**FIG. 9**

□1-1.02  □1.02-1.04  □1.04-1.06  □1.06-1.08  □1.08-1.1

## FIG. 10

1.1
1.08
1.06
1.04
1.02
1

☐ 1-1.02    ☐ 1.02-1.04    ☐ 1.04-1.06    ☐ 1.06-1.08    ☐ 1.08-1.1

**FIG. 11A**

**FIG. 11B**

## INTERNATIONAL SEARCH REPORT

| International application No. |
| --- |
| **PCT/JP2023/041188** |

| A. | CLASSIFICATION OF SUBJECT MATTER |
| --- | --- |

*G02C 7/06*(2006.01)i
FI: G02C7/06

According to International Patent Classification (IPC) or to both national classification and IPC

| B. | FIELDS SEARCHED |
| --- | --- |

Minimum documentation searched (classification system followed by classification symbols)

G02C1/00-13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2017-102346 A (ITOH OPTICAL IND. CO., LTD.) 08 June 2017 (2017-06-08) entire text, all drawings | 1-13 |
| A | JP 2017-198806 A (KPD SOLUTIONS K.K.) 02 November 2017 (2017-11-02) entire text, all drawings | 1-13 |
| A | JP 2013-52095 A (SEIKO EPSON CORPORATION) 21 March 2013 (2013-03-21) entire text, all drawings | 1-13 |
| A | JP 2010-517086 A (RODENSTOCK GMBH) 20 May 2010 (2010-05-20) entire text, all drawings | 1-13 |
| A | JP 9-507925 A (OPTISCHEN WERKE G. RODENSTOCK) 12 August 1997 (1997-08-12) entire text, all drawings | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 December 2023** | **26 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
|---|
| **PCT/JP2023/041188** |

| Patent document cited in search report | | | Publication date (day/month/year) | Patent family member(s) | | | Publication date (day/month/year) |
|---|---|---|---|---|---|---|---|
| JP | 2017-102346 | A | 08 June 2017 | JP | 6396880 | B2 | |
| JP | 2017-198806 | A | 02 November 2017 | (Family: none) | | | |
| JP | 2013-52095 | A | 21 March 2013 | US | 2013/0057825 | A1 | |
| | | | | entire text, all drawings | | | |
| | | | | JP | 5897285 | B2 | |
| JP | 2010-517086 | A | 20 May 2010 | US | 2010/0309428 | A1 | |
| | | | | entire text, all drawings | | | |
| | | | | US | 8840245 | B2 | |
| | | | | EP | 2115525 | A1 | |
| | | | | EP | 2115525 | B1 | |
| | | | | WO | 2008/089996 | A1 | |
| | | | | DE | 112008000049 | A5 | |
| | | | | AT | E514118 | T1 | |
| | | | | ES | 2368695 | T3 | |
| | | | | JP | 5745768 | B2 | |
| | | | | JP | 2015-108852 | A | |
| | | | | JP | 6069389 | B2 | |
| JP | 9-507925 | A | 12 August 1997 | US | 5880810 | A | |
| | | | | entire text, all drawings | | | |
| | | | | EP | 754312 | A1 | |
| | | | | WO | 96/13748 | A2 | |
| | | | | AU | 3800195 | A | |
| | | | | AU | 710343 | B2 | |
| | | | | JP | 4024851 | B2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016047712 A
- WO 97019382 A